# FASCICULE DE BREVET EUROPEEN

(11) **EP 0 427 619 B1**
(45) Date de publication et mention de la délivrance du brevet: **09.11.1994**
(21) Numéro de dépôt: 90403148.1
(22) Date de dépôt: 07.11.1990
(51) Int. Cl.: H05B 3/86

(54) **Vitrage feuilleté automobile chauffant**
Heizbare Verbundglasscheibe für Fahrzeuge
Heated laminated glass window for vehicles

(30) Priorité: 09.11.1989 DE 3937346
(43) Date de publication de la demande: 15.05.1991
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Holzer, Gerhard, Dr., W-5100 Aachen (DE); Kramling, Franz, Dr., W-5100 Aachen (DE); Triebs, Friedrich, Dr., W-5100 Aachen (DE)
(74) Mandataire: de Toytot, Robert

(56) Documents cités:
- EP-A- 0 188 160
- EP-A- 0 217 703
- DE-A- 1 923 311
- DE-A- 2 533 364
- DE-U- 8 815 848
- FR-A- 2 390 882
- FR-A- 2 538 175

## Description

L'invention concerne un procédé de fabrication d'un vitrage automobiles feuilleté comportant deux feuilles de verre unitaires associées par une couche intercalaire thermoplastique et étant équipé d'une couche conductrice superficielle et mince jouant le rôle d'une résistance chauffante, vitrage dans lequel l'une des deux feuilles de verre constituant le vitrage feuilleté comporte sur sa surface destinée à être en contact avec la couche intercalaire thermoplastique, le long de deux côtés opposés, des amenées de courant faites d'un émail conducteur de l'électricité sur lesquelles est déposée la couche conductrice superficielle et mince, le vitrage comportant des bandes de clinquant métallique situées au-dessus des amenées de courant et en contact électrique avec la couche conductrice mince, les bandes de clinquant métallique sortant de la périphérie du vitrage feuilleté.

Des vitrages feuilletés chauffant électriquement équipés d'une couche mince transparente conductrice continue en contact électrique étroit avec des amenées de courant sont connus de plusieurs côtés. Dans le brevet US 4 668 270 on décrit par exemple des amenées de courant déposées sur la surface du verre et faites d'un émail conducteur de l'électricité sur lequel on vient déposer ensuite simultanément sur le verre et sur l'émail conducteur la couche mince transparente qui joue le rôle d'une résistance chauffante. Par ailleurs, on associe électriquement des connexions aux conducteurs pour permettre le raccordement à la source de courant.

De même, il est connu de commencer à l'inverse par déposer la couche mince conductrice sur le verre puis seulement dans un deuxième temps d'appliquer sur le verre une pâte conductrice destinée à constituer les amenées de courant et enfin de la faire cuire (DE 35 43 694 A1).

La demande de brevet européenne EP 0 322 756 A décrit un procédé dans lequel on commence par déposer sur la feuille de verre extérieure du côté en contact avec l'intercalaire thermoplastique un cadre à base d'émail opaque, puis où l'on dépose sur cet émail les amenées de courant constituées d'une pâte conductrice de l'électricité et enfin seulement la couche mince conductrice destinée à chauffer le vitrage. Les sorties de courant sont ici également reliées électriquement aux amenées de courant émaillées.

Il fait également partie de l'état de la technique de déposer dans une première phase la couche mince conductrice chauffante sur la surface du verre et de mettre en contact avec elle des bandes de clinquant qui sont liées à la couche mince grâce à une colle conductrice de l'électricité (US 3 612 745 B).

Il est également connu, selon le document DE-A-2 533 364, ayant servi à délimiter le préambule de la revendication 1, de réaliser un vitrage feuilleté comportant une couche conductrice alimentée par des amenées de courant reliées directement à des bandes de cuivre débordant du vitrage.

Selon ce document, l'ensemble couche conductrice, amenées de courant, bandes de cuivre est au sein du vitrage feuilleté, c'est-à-dire entre les deux feuilles de verre.

Tous les vitrages chauffants feuilletés équipés de couches minces conductrices transparentes de même que tous les procédés pour fabriquer de tels vitrages chauffants présentent de nombreux inconvénients spécifiques. Ainsi lorsque la couche mince est en contact avec des bandes de clinquant il est courant lorsqu'on met le vitrage en chauffe que l'on constate une détérioration de la couche mince ou même sa destruction complète au contact du clinquant, en effet ces contacts sont irréguliers et des pointes de tension ou de courant se produisent entre le clinquant et la couche. Lorsque les amenées de courant sont constituées d'un émail déposé sur le verre ou sur la couche il se présente des problèmes d'une autre nature liés à la nécessité de réaliser les contacts électriques par soudure directement sur la surface du verre ce qui produit une surépaisseur et nécessite de prévoir un trou dans la deuxième feuille de verre à ce niveau. Cela a pour conséquence non seulement une phase de travail supplémentaire mais entraîne des difficultés pour rendre le vitrage étanche en particulier lors du montage dans la carrosserie.

L'invention se donne pour mission de fournir un procédé de fabrication d'un vitrage automobile du type mentionné plus haut dans lequel d'une part le couplage du courant électrique et de la couche conductrice par l'intermédiaire des amenées de courant se fait de manière régulière sans risque de détérioration ou de destruction de la couche par suite de pointes de tension ou de courant et dans lequel d'autre part la connexion entre les amenées de courant à l'intérieur du vitrage et les conducteurs électriques en dehors du vitrage s'effectue en dehors de lui et sans perturber l'étanchéité du vitrage à sa périphérie et sans entraîner de difficultés lors du montage.

Ce but est atteint en disposant sur la couche conductrice superficielle et mince, au-dessus de chacune des amenées de courant obtenues par la cuisson d'un émail conducteur, deux des bandes de clinquant métallique, chacune de ces bandes étant équipée à l'avance à l'une de ses extrémités d'une gaine constituée d'un plastique résistant à la déchirure qui sort du vitrage feuilleté, la gaine étant revêtue dans la zone destinée à se retrouver à l'intérieur du vitrage feuilleté d'une couche de colle qui assure une liaison solide et durable avec la couche conductrice superficielle et mince et la couche intercalaire thermoplastique, en coupant les extrémités des bandes de clinquant métallique qui sont dépourvues de gaine, à la longueur adéquate pour que chacune des bandes de clinquant pénètre sensiblement jusqu'au milieu de l'amenée de courant correspondante, et en disposant les deux bandes de clinquant correspondantes à une amenée de courant, l'une dans le prolongement de l'autre.

Grâce à l'utilisation d'éléments de clinquant métallique avec une épaisseur de 30 à 100 µm et au dépôt d'amenées de courant faites d'un émail conducteur entre lesquelles la couche mince conductrice a été déposée, on atteint une régularité dans le couplage électrique entre la couche conductrice et les amenées de courant qui est surprenante et cela sans que des surtensions ou des pointes dans l'intensité du courant ne se produisent. Du fait qu'entre les amenées de courant constituées d'un émail conducteur et la couche mince conductrice un contact intime s'établit naturellement sur toute la surface de l'amenée de courant, il n'est pas nécessaire qu'un contact aussi étroit soit réalisé entre la bande de clinquant et la couche mince conductrice. Au contraire, on a pu constater que le but de l'invention était atteint même lorsque le contact entre ces deux dernières surfaces n'était pas parfaitement continu. C'est ainsi qu'il suffit par exemple que le contact mécanique entre la bande de clinquant et la couche mince soit réalisé naturellement lors du passage à l'autoclave du vitrage terminé avec une pression de plus de 10 atmosphères pour que la liaison électrique soit assurée dans de bonnes conditions. Il semble que ce soit la rugosité de surface naturelle des amenées de courant qui assure un contact ponctuel multiple avec la bande métallique, contact qui suffit à permettre le passage du courant entre les amenées de courant à base d'émail conducteur et la couche conductrice dans des conditions particulièrement régulières.

Une variante préférée de l'invention prévoit que les bandes de clinquant métallique soient revêtues sur l'une de leurs surfaces d'une couche auto-collante. Celle-ci est destinée à assurer un contact entre le clinquant et la couche conductrice superficielle et mince et facilite le processus de fabrication. On peut utiliser comme colle une colle conductrice de l'électricité. De manière inattendue on a constaté que le but de l'invention était atteint même lorsque la colle déposée sur le clinquant n'était pas conductrice de l'électricité. On peut interpréter ce résultat en disant qu'au moment de l'assemblage la pression agit sur les rugosités de l'émail constituant les amenées de courant et leur fait traverser la colle ce qui permet à toute la surface de servir au passage du courant.

On dispose des éléments de clinquant sur chacune des amenées de courant qui équipe les deux bords opposés du vitrage en les faisant sortir des deux côtés de manière à pouvoir équiper chaque extrémité d'une cosse permettant le raccordement électrique. On obtient ainsi que chacune des connexions ne soit responsable que du passage de la moitié du courant et que l'on puisse de la sorte, toutes choses égales par ailleurs, en diviser la section par deux.

D'autres caractéristiques et avantages de l'invention apparaîtront à la lecture de la description et des exemples préférés ainsi que des figures qui suivent.

Les figures présentent successivement :
- figure 1 : un vitrage feuilleté chauffant correspondant à l'invention,
- figure 2 : une coupe agrandie le long de la ligne II/II de la figure 1,
- figure 3 : une bande de clinquant préparée pour être utilisée dans un vitrage feuilleté chauffant,
- figure 4 : une coupe le long de la ligne IV/IV de la figure 3,
- figure 5 : une coupe partielle d'un vitrage chauffant dans son joint en élastomère dans la région des connexions électriques.

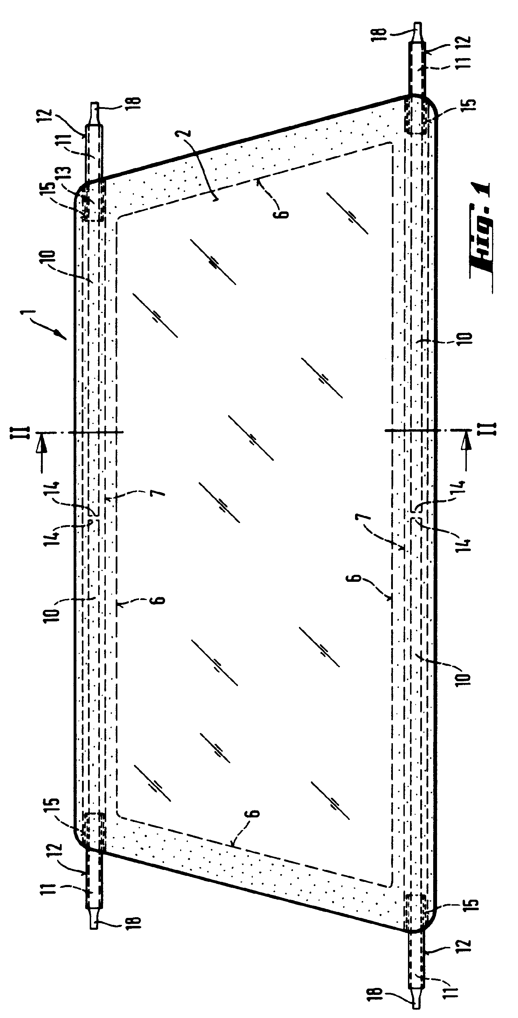

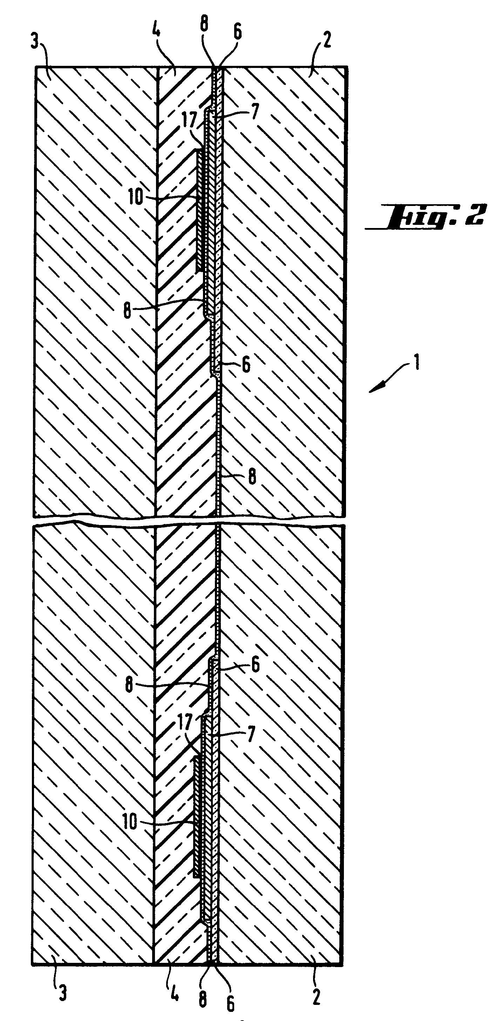

Les figures 1 et 2 montrent en détail la constitution du vitrage feuilleté chauffant 1. Celui-ci est destiné à constituer un pare-brise qui sera monté dans la baie d'une carrosserie automobile. Le vitrage feuilleté 1 se compose d'une feuille de verre unitaire 2 dirigée vers l'extérieur du véhicule, de la feuille de verre unitaire 3 dirigée vers l'intérieur du véhicule, ainsi que du film intercalaire 4 destiné à associer les deux feuilles de verre qui est à base d'une matière thermoplastique par exemple de polyvinylbutyral.

La feuille de verre 2 est équipée à sa périphérie d'une couche 6 en forme de cadre. Celle-ci est à base d'un émail opaque. La couche 6 est déposée sur la feuille de verre 2 lorsqu'elle est encore plane par un procédé de sérigraphie à l'écran de soie. A la fin du dépôt la couche 6 est séchée par passage dans une étuve, suffisamment pour que la feuille de verre 2 puisse être soumise à un nouveau dépôt par le même procédé. Ce dépôt s'effectue le long des bords supérieurs et inférieurs de la feuille 2 au-dessus de la couche 6, il s'agit des amenées de courant 7 à base d'un émail conducteur de l'électricité.

La phase suivante du procédé consiste à cuire les couches 6 et 7. Cette opération s'effectue en faisant transiter le vitrage 2 dans un four traversant équipé de rouleaux. Là, la feuille de verre est portée à des températures de 5 à 600°C.

Enfin, dans la phase suivante les deux feuilles de verre 3 et 2, cette dernière équipée des couches 6 et 7, sont assemblées et toutes deux subissent un bombage commun. A l'issue de cette opération, la feuille 2 est équipée sur sa surface comportant les couches 6 et 7 de la couche mince conductrice superficielle et mince 8 destinée à jouer le rôle de résistance chauffante. Cette couche 8 est déposée par les techniques connues habituelles. Elle consiste en plusieurs couches minces élémentaires comportant une couche d'argent conductrice. Habituellement, la couche d'argent est prise en sandwich entre plusieurs autres couches, en particulier les couches d'oxyde métallique qui jouent le rôle de couches d'accrochage et/ou de couches de protection ainsi que des couches interférentielles qui jouent un rôle d'anti-reflet pour la couche d'argent. Le dépôt des couches minces se fait de préférence sous vide par le procédé de pulvérisation cathodique assistée par un champ magnétique ou bien par le même procédé en atmosphère réactive. Dans ce dernier cas ce sont des composés métalliques qui sont déposés en particulier des oxydes. De telles associations de couches ainsi que leur procédé de dépôt sont à la disposition de l'homme de l'art.

La phase suivante du procédé consiste à déposer sur la couche conductrice 8 dans la zone des amenées de courant 7 des bandes de clinquant 10 qui seront fixées sur la feuille de verre 2 de manière à ce qu'elles ne puissent pas glisser pendant la fin du processus de fabrication. C'est pourquoi les bandes de clinquant sont équipées dans ce but d'une couche mince 17 faite d'un matériau auto-collant. Celui-ci peut ne pas être conducteur de l'électricité comme les colles à base d'isoprène ou d'acrylate ou bien il peut être conducteur et alors il s'agit d'acrylate. Les bandes de clinquant 10 ont une largeur de 8 à 16 mm et une épaisseur de 30 à 80 µm. Elles sont de préférence en cuivre. On les dépose sur la feuille de verre 2 avec une longueur telle que de chaque côté un segment 11 long de 5 à 10 cm dépasse des petits côtés de la feuille 2.

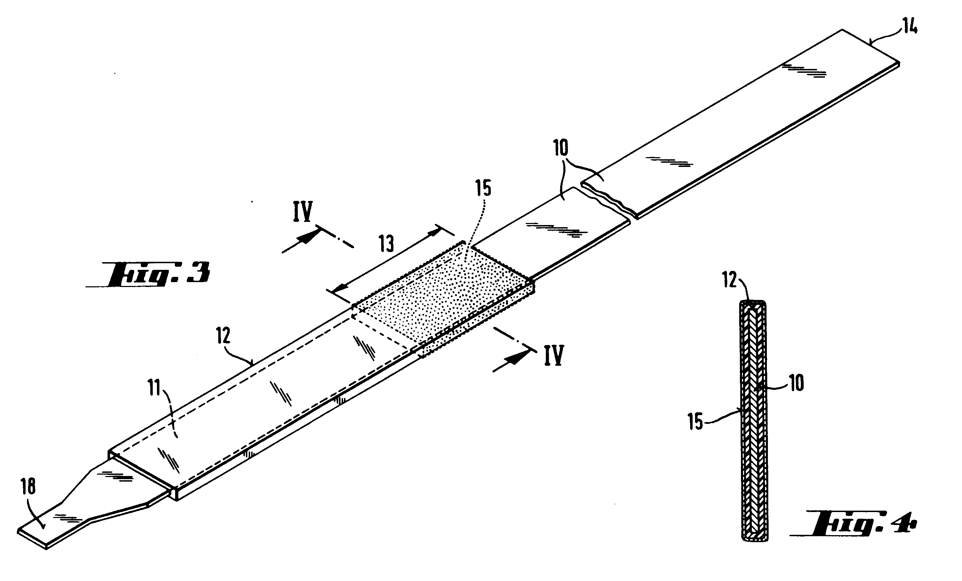

Les bandes de clinquant 10 sont préparées de telle manière, comme on l'a représenté figure 3, que leurs extrémités sont revêtues d'une gaine 12 faite d'un plastique résistant à la déchirure. La gaine de plastique 12 est résistante et elle fait avec la bande métallique une association de longue durée étanche. Comme matériau adapté à constituer la gaine 12 d'excellents résultats ont été obtenus avec une matière plastique à base de polyimides. Du côté extérieur, la gaine 12, dans sa partie 13 en contact avec la feuille de verre, est revêtue d'une couche de colle 15 à base d'acrylate, de silicone ou de polysiloxanes. Cette couche assure une liaison solide entre la gaine 12 et le vitrage à couche 2. De cette manière, des forces d'extension qui pourraient agir sur la section 11 sont transmises à la feuille de verre et les bandes de clinquant sont ainsi protégées.

Les bandes de clinquant 10 sont préparées à une de leurs extrémités en les revêtant de la gaine 12. La longueur totale de ces bandes est telle qu'elles puissent être utilisées sur le pare-brise le plus large. Comme on le voit sur la figure 1 on déposera sur chacune des amenées de courant 7 une bande de clinquant 10 dont l'extrémité opposée à la gaine 12 aura été coupée sur une longueur telle que chacune des bandes 10 puisse parvenir jusque sensiblement au milieu de l'amenée de courant 7. Il n'est pas nécessaire que les deux extrémités 14 des bandes de clinquant se touchent, au contraire il est préférable, comme on l'a représenté figure 1 qu'elles s'écartent légèrement l'une de l'autre. Le fait de pouvoir préparer des bandes de clinquant toutes identiques et de les mettre à longueur seulement en les posant permet une économie sur leur coût de production. Le fait d'ajuster à chaque fois leur longueur aux conditions du vitrage concerné est une opération très simple.

Après que la feuille de verre 2 ait subi la préparation précédente et qu'elle ait été équipée des bandes de clinquant 10 elle est assemblée de la manière habituelle avec l'autre feuille de verre 3 par l'intermédiaire d'un film par exemple en polyvinylbutyral d'une épaisseur de 0,76 mm. L'utilisation de chaleur et de pression en particulier dans un autoclave adapté permet à l'assemblage précédent de devenir un vitrage feuilleté.

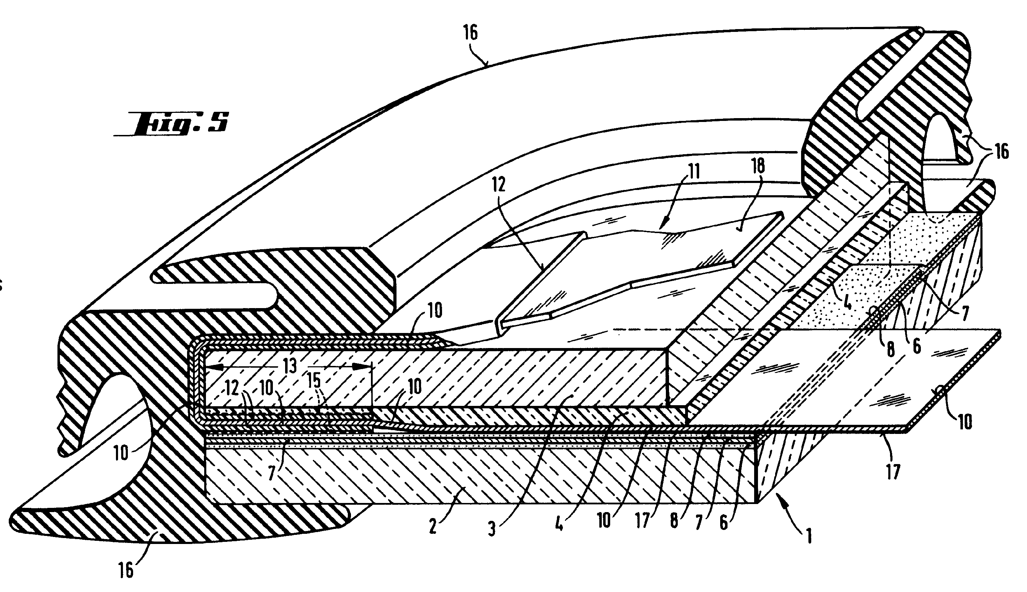

Les extrémités 11 des bandes de clinquant équipées de leur gaine 12 sont minces et possèdent une relative flexibilité. Ils sont susceptibles comme on l'a représenté figure 5 de contourner le bord du vitrage feuilleté quand par exemple le vitrage 1 est monté dans un profilé 16 en matériau élastique qui lui permet d'être installé dans la baie d'une carrosserie. L'extrémité 11 de la bande de clinquant qui est destiné à réaliser la connexion électrique est équipée d'une cosse 18 qui pourra servir après montage du pare-brise à faire le branchement électrique du vitrage chauffant.

## Revendications

1. Procédé destiné à fabriquer un vitrage automobile feuilleté (1) comportant deux feuilles de verre unitaires (2, 3) associées par une couche intercalaire thermoplastique (4) et étant équipé d'une couche conductrice superficielle et mince (8) jouant le rôle d'une résistance chauffante, vitrage dans lequel l'une (2) des deux feuilles de verre (2, 3) constituant le vitrage feuilleté (1) comporte sur sa surface destinée à être en contact avec la couche intercalaire thermoplastique (4), le long de deux côtés opposés, des amenées de courant (7) faites d'un émail conducteur de l'électricité sur lesquelles est déposée la couche conductrice superficielle et mince (8), le vitrage comportant des bandes de clinquant métallique (10) situées au-dessus des amenées de courant (7) et en contact électrique avec la couche conductrice mince (8), lesdites bandes de clinquant métallique (10) sortant de la périphérie du vitrage feuilleté (1), caractérisé en ce qu'on dispose sur la couche conductrice superficielle et mince (8), au-dessus de chacune des amenées de courant (7), deux desdites bandes de clinquant métallique (10), chacune de ces bandes étant équipée à l'avance à l'une de ses extrémités d'une gaine (12) constituée d'un plastique résistant à la déchirure qui sort du vitrage feuilleté (1), ladite gaine (12) étant revêtue dans la zone destinée à se retrouver à l'intérieur du vitrage feuilleté (1) d'une couche de colle (15) qui assure une liaison solide et durable avec la couche conductrice superficielle et mince (8) et la couche intercalaire thermoplastique (4), en ce qu'on coupe les extrémités des bandes de clinquant métallique (10) qui sont dépourvues de gaine (12), à la longueur adéquate pour que chacune des bandes de clinquant (10) pénètre sensiblement jusqu'au milieu de l'amenée de courant (7) correspondante et en ce qu'on dispose les deux bandes de clinquant (10) correspondantes à une amenée de courant (7), l'une dans le prolongement de l'autre.

2. Procédé selon la revendication 1, caractérisé en ce qu'on équipe les bandes de clinquant (10) du côté qui repose sur la couche conductrice superficielle et mince (8), d'une couche auto-collante (17) qui permet la fixation des clinquants sur la couche conductrice superficielle et mince (8).

3. Procédé selon l'une des revendications 1 ou 2, caractérisé en ce qu'on utilise comme gaine (12) entourant l'une des extrémités des bandes de clinquant (10), une gaine (12) faite d'un plastique à base de polyimide.

4. Vitrage automobile chauffant réalisé selon l'une des revendications 1 à 3, caractérisé en ce que les bandes de clinquant métallique (10) sont en cuivre avec une largeur de 8 à 15 mm et une épaisseur de 30 à 100 µm.

## Patentansprüche

1. Verfahren zur Herstellung einer Autoglasscheibe aus Verbundglas (1), mit zwei durch eine thermoplastische Zwischenschicht (4) miteinander verbundenen Einzelglasscheiben (2,3) und mit einer elektrisch leitenden, als Heizwiderstand dienenden dünnen Oberflächenschicht (8), wobei die eine (2) der beiden die Verbundglasscheibe (1) bildenden Glasscheiben (2,3) auf ihrer für den Kontakt mit der thermoplastischen Zwischenschicht (4) bestimmten Oberfläche entlang zweier gegenüberliegenden Kanten Stromzuführungsleiter (7) aus einem elektrisch leitenden Email aufweist, auf denen die elektrisch leitende dünne Oberflächenschicht (8) angeordnet ist, und die Verbundglasscheibe oberhalb der Stromzuführungsleiter (7) und in elektrischem Kontakt mit der dünnen Leitschicht (8) über die Umfangsfläche der Verbundglasscheibe (1) überstehende Metallfolienbänder (10) aufweist, **dadurch** **gekennzeichnet**, daß auf der elektrisch leitenden dünnen Oberflächenschicht (8) oberhalb jedes Stromzuführungsleiters (7) zwei Metallfolienbänder (10) angeordnet werden, von denen jedes zuvor an einem Ende mit einer aus der Verbundglasscheibe (1) herausragenden Umhüllung (12) aus einem reißfesten Kunststoff versehen wurde, wobei die Umhüllung (12) in dem im Innern der Verbundglasscheibe (1) anzuordnenden Bereich mit einer eine feste und dauerhafte Verbindung mit der dünnen Oberflächenschicht (8) und mit der Kunststoffzwischenschicht (4) sicherstellenden Kleberschicht (15) versehen ist, daß die Enden der Metallfolienbänder (10), die frei von der Umhüllung (12) sind, auf die geeignete Länge abgeschnitten werden, damit die beiden Metallfolienbänder (10) im wesentlichen bis zur Mitte des entsprechenden Stromzuführungsleiters (7) reichen, und daß die beiden entsprechenden Metallfolienbänder (10) so auf einem Stromzuführungsleiter (7) angeordnet werden, daß der eine in der Verlängerung des anderen liegt.

2. Verfahren nach Anspruch 1, dadurch gekennzeichnet, daß die Metallfolienbänder (10) auf der auf der elektrisch leitenden dünnen Oberflächenschicht (8) aufliegenden Seite mit einer selbstklebenden Schicht (17) versehen werden, die die Fixierung der Metallfolien auf der elektrisch leitenden dünnen Oberflächenschicht (8) erlaubt.

3. Verfahren nach Anspruch 1 oder 2, dadurch gekennzeichnet, daß als Umhüllung für das eine Ende der Metallfolienbänder (10) eine Umhüllung (12) aus einem Kunststoff auf Basis von Polyimid verwendet wird.

4. Heizbare Autoglasscheibe, hergestellt nach einem der Ansprüche 1 bis 3, dadurch gekennzeichnet, daß die Metallfolienbänder (10) aus Kupfer bestehen und eine Breite von 8 bis 15 mm und eine Dicke von 30 bis 100 µm aufweisen.

## Claims

1. Method intended for the production of a laminated automobile pane (1), comprising two single glass sheets (2, 3) associated together by a thermoplastics intermediate layer (4) and being equipped with a thin surface conducting film (8) fulfilling the function of a heating resistor, in which pane the one (2) of the two glass sheets (2, 3) constituting the laminated pane (1) comprises, on its face intended to be in contact with the thermoplastics intermediate layer (4), along two opposite sides, electricity supply leads (7) made of an electrically conducting enamel, onto which there is deposited the thin surface conducting film (8), the pane comprising strips of metal foil (10) situated over the supply leads (7) and in electrical contact with the thin conducting film (8), said strips of metal foil (10) emerging from the periphery of the laminated pane (1), characterized in that there are disposed, on the thin surface conducting film (8) over each of the electrical supply leads (7), two of said metal foil strips (10), each of these strips being equipped in advance at the one of its ends with a sheath (12) constituted of a tear-resistant plastics material which emerges from the laminated pane (1), said sheath (12) being coated, in the zone intended to be situated inside the laminated pane (1), with a layer of adhesive (15) which assures a firm and durable bond with the thin surface conducting film (8) and the intermediate thermoplastics layer (4), in that the ends of the metal foil strips (10) which are without any sheath (12) are cut to a length sufficient for each of the foil strips (10) to penetrate substantially to the middle of the corresponding electrical supply lead (7), and in that the two foil strips (10) corresponding to one electrical supply lead (7) are disposed the one in the continuation of the other.

2. Method according to Claim 1, characterized in that the foil strips (10) are provided, on the side which rests on the thin surface conducting film (8), with a self-adhesive film (17) which enables the foil strips to be fixed to the thin surface conducting film (8).

3. Method according to one of Claims 1 or 2, characterized in that there is used as sheath (12), surrounding the one of the ends of the foil strips (10), a sheath (12) made of a plastics material based upon polyimide.

4. Heating automobile pane constructed according to one of Claims 1 to 3, characterized in that the metal foil strips (10) are of copper having a width of 8 to 15 mm and a thickness of 30 to 100 µm.
